# EUROPEAN PATENT APPLICATION

(11) **EP 2 638 945 A2**
(43) Date of publication of application: **18.09.2013**
(21) Application number: 11839345.3
(22) Date of filing: 20.10.2011
(51) Int. Cl.: B01D 46/00, B01D 45/00

(54) **METHOD AND DEVICE FOR REMOVING DUST PARTICLES FROM REDUCING GAS**

(30) Priority: 12.11.2010 KR 20100112868; 12.11.2010 KR 20100112866; 10.11.2010 KR 20100111778
(71) Applicant: Posco, Pohang-shi Kyeongsangbuk-do 790-300 (KR)
(72) Inventor: CHO, Minyoung, Pohang-shi Kyungsangbuk-do 790-300 (KR); NAMKUNG, Won, Pohang-shi Kyungsangbuk-do 790-300 (KR); KIM, Hyun Soo, Pohang-shi Kyungsangbuk-do 790-300 (KR); YI, Sang-Ho, Pohang-shi Kyungsangbuk-do 790-300 (KR)
(74) Representative: Potter Clarkson LLP
(86) International application number: PCT/KR2011/007839
(87) International publication number: WO 2012/064027

(57) **Abstract**

The present invention relates to a method and device for removing dust particles from reducing gas. The method of the present invention comprises a step of providing reducing gas, a step of injecting the reducing gas into a chamber including a sacrificial nozzle therein, and a step of discharging the reducing gas from the chamber. According to the present invention, since low-melting alkali chloride contained in the reducing gas is removed before being blown into a fluidized reducing furnace, the operation rate of the fluidized reducing furnace is improved due to the reduced clogging of the distribution nozzle in the fluidized reducing furnace, and the ore reduction rate is increased and fuel costs are reduced as the temperature of the reducing gas is increased.

## Description

### Technical Field

The present invention relates to a method and apparatus for removing dust particles from reducing gas. More particularly, the present invention relates to a method and apparatus for remvoing dust particles from reducing gas by adopting an attachment forming layer.

### Background Art

In an apparatus for manufacturing molten iron, including a multi-stage fluidized bed furnace and smelting furnace and directly using fine or lump coal and fine iron-containing ores, reducing gas used for the flow and reduction of the ores in the multi-stage fluidized bed furnace can be generated from a melting gasification furnace or an electrical furnace in which a coal packed layer is formed and can be then supplied.

The reducing gas discharged from the melting gasification furnace includes carbon monoxide (CO) and hydrogen (H₂) as principal ingredients, has strong reducing power, and includes dust particles of about 100 to 200 g per reducing gas 1Nm³.

The reason why the reducing gas includes a large amount of the dust particles as described above is that the dust particles are generated due to the thermal decomposition of coal charged into the melting gasification furnace because a high-temperature work with 1000°C or higher is performed at the upper part of the melting gasification furnace. Most of the generated dust particles move into the coal packed layer, but some of the fine particle rides an ascending air current of the reducing gas that rises from the bottom and then flows into a reducing gas conduit.

90% or higher of the inflow dust particles is collected by a cyclone connected to the reducing gas conduit, and the collected dust particles are blown into the melting gasification furnace and then reused. Dust particles that are not collected flow into the fluidized reduction furnace via the reducing gas conduit.

As a result, the reducing gas flowing into the fluidized reduction furnace includes dust particles having an amount of about 10 - 20 g per 1Nm³ and includes, as principal ingredients, pyrolytic residues (fixed carbon and ashes) of coal, fine-grained reduced iron, and alkali compounds partially.

In order for the reducing gas containing the dust particles and having a high temperature to be uniformly supplied to the fluidized reduction furnace having a great diameter and for a flow and reduction to be uniformly maintained in the entire chemical reactor, a distribution plate in which several hundreds of nozzles through which gas passes are disposed at specific intervals is installed in a cylindrical fluidized reduction furnace chemical reactor.

In a process in which the reducing gas containing a large amount of the dust particles passes through the nozzles, alkali compounds in a liquid or gaseous state can corrode a nozzle surface and make the nozzle surface rough, thereby increasing the formation of attachments on the nozzle surface.

Furthermore, the alkali compounds, etc. have adhesive power because they are present in a liquid state at a high temperature, thereby being capable of increasing the formation of attachments on the nozzle surface.

The attachments formed on the nozzle surface as described above gradually grow in a process of a work proceeding and may clog the nozzle in the worst case.

If some of the nozzles for inducing a uniform flow of gas are clogged by the attachments, the flow of gas is concentrated on some regions. As a result, reduced ores that are normally flowing within the chemical reactor are integrated in a region in which the flow of gas has not been formed, thereby being capable of forming the stagnant layer of the ores.

Accordingly, the flow of gas within the fluidized reduction furnace becomes poor due to the clogged nozzles. As a result, a flow and reduction, that is, the natural functions of the fluidized reduction furnace, cannot be performed.

Furthermore, an ore reduction rate is also reduced because temperature within the fluidized reduction furnace remains low in order to suppress attachments from being formed on the nozzles. In order to solve the problems, the work of the fluidized reduction furnace must be stopped and nozzles on which attachments have been formed must be replaced.

The above information disclosed in this Background section is only for enhancement of understanding of the background of the invention and therefore it may contain information that does not form the prior art that is already known in this country to a person of ordinary skill in the art.

### DETAILED DESCRIPTION

### Technical Problem

The present invention has been made in an effort to provide a method and apparatus for remvoing dust particles from reducing gas having an advantage of increasing a rate of a work and a reduction rate of a fluidized bed furnace in such a manner that dust particles, such as alkali chloride contained in the reducing gas, are previously attached and removed in order to reduce the clogging of a nozzle unit formed in the distribution plate of the fluidized bed furnace to which the reducing gas is supplied.

### Technical Solution

An exemplary embodiment of the present invention provides an apparatus for removing dust particles from reducing gas, including an injection conduit configured to inject reducing gas, a chamber configured to include a sacrificial nozzle unit for collecting dust particles from the injected reducing gas, and a discharge conduit configured to discharge the reducing gas including the collected dust particles.

A temperature of the reducing gas ranges from 600°C to 850°C.

The injection conduit includes a first gate for connecting or blocking the flow of high-temperature gas.

The sacrificial nozzle unit includes a bundle of pipes.

The apparatus for removing dust particles from reducing gas further includes at least one differential gauge for detecting pressure applied to the input terminal and output terminal of the sacrificial nozzle unit.

A plurality of the sacrificial nozzle units included in the chamber is formed in multiple stages in the length direction of the chamber.

The apparatus for removing dust particles from reducing gas further includes a replacement passage pipe connected to the chamber and configured to bypass the injected reducing gas.

The replacement passage pipe includes a second gate for connecting or blocking the flow of high-temperature.

Another embodiment of the present invention provides a method of removing dust particles from reducing gas, including the steps of supplying reducing gas, injecting the reducing gas into a chamber equipped with a sacrificial nozzle unit therein, and discharging the reducing gas from the chamber.

The method of removing dust particles from reducing gas further includes the step of measuring a difference in a pressure between an input terminal and an output terminal of the sacrificial nozzle unit.

Furthermore, the method of removing dust particles from reducing gas further includes the step of bypassing the reducing gas injected into the chamber.

Yet another embodiment of the present invention provides the sacrificial nozzle unit of an apparatus for removing dust particles, including an injection conduit configured to inject reducing gas, a chamber configured to include a sacrificial nozzle unit for collecting dust particles from the injected reducing gas, and a discharge conduit configured to discharge the reducing gas including the collected dust particles, wherein the sacrificial nozzle unit is made of stainless steel.

At least one selected from kaolinite, silicon dioxide, and bauxite is coated on a surface of the stainless steel forming the sacrificial nozzle units of the apparatus for removing dust particles.

### Advantageous Effects

Effects obtained by previously removing attachment-causing materials included in reducing gas in the apparatus for removing dust particles in accordance with an exemplary embodiment of the present invention are as follows.

The formation of attachments on the nozzles formed in the distribution plate under the fluidized bed furnace is suppressed when fine iron ores are reduced in the fluidized bed furnace. Accordingly, the flow and reduction of the fine iron ores can become smooth because the flow of gas supplied to the fluidized bed furnace becomes uniform.

Furthermore, by suppressing the formation of attachments on the nozzles formed in the distribution plate within the fluidized bed furnace, a nozzle exchange cycle can be extended and thus a rate of operation of the fluidized bed furnace can be improved.

Furthermore, a reduction rate of ores can be improved by maintaining a temperature of reducing gas injected into the fluidized bed furnace remains high.

### Brief Description of the Drawings

FIG. 1 is a diagram showing the processes of a method of removing dust particles from reducing gas in accordance with an exemplary embodiment of the present invention.
FIG. 2 is a diagram schematically showing the construction of an apparatus for removing dust particles for implementing the method of removing dust particles from reducing gas in accordance with an exemplary embodiment of the present invention.
FIG. 3 is an enlarged diagram of sacrificial nozzle units formed in the chamber of the apparatus for removing dust particles of FIG. 2 and a diagram conceptually showing a phenomenon in which alkali chloride is attached to pipes.
FIG. 4 is an enlarged diagram of a bundle of tapered pipes forming the sacrificial nozzle units formed in the chamber of FIG. 2 in accordance with another exemplary embodiment.

### Best Mode

The merits and characteristics of the present invention and the methods for achieving the merits and characteristics thereof will become more apparent from the following embodiments taken in conjunction with the accompanying drawings. However, the present invention is not limited to the disclosed embodiments, but may be implemented in various ways. The embodiments are provided to complete the disclosure of the present invention and to enable a person having ordinary skill in the art to understand the scope of the present invention. The present invention is defined by the category of the claims. The same reference numbers will be used to refer to the same or similar parts throughout the drawings.

Hereinafter, an apparatus for removing dust particles from reducing gas in accordance with an exemplary embodiment of the present invention is described below with reference to the drawings. For reference, in describing the present invention, a detailed description of known functions or constructions related to the present invention will be omitted if it is deemed that they would make the gist of the present invention unnecessarily vague.

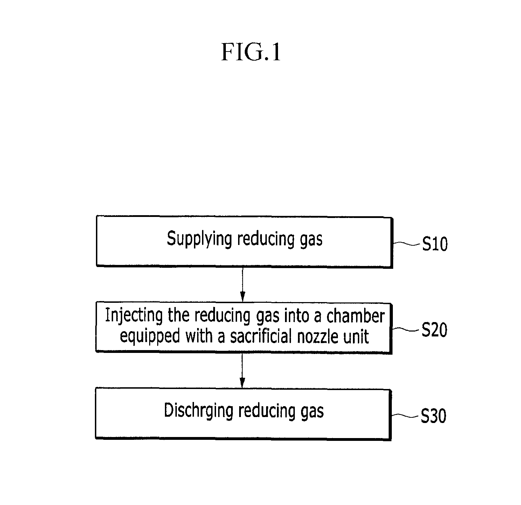

FIG. 1 is a diagram showing the processes of a method of removing dust particles from reducing gas in accordance with an exemplary embodiment of the present invention.

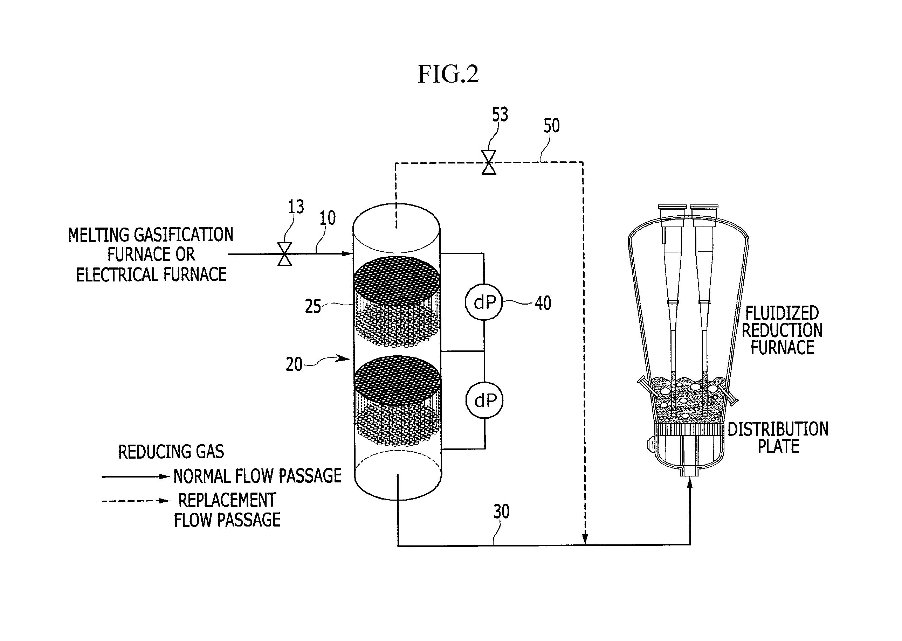

FIG. 2 is a schematic diagram showing the construction of an apparatus for removing dust particles for implementing the method of removing dust particles from reducing gas in FIG.1.

Referring to FIG. 2, dust particles are removed from reducing gas that passes through an injection conduit 10 for injecting the reducing gas within a chamber 20, and the resulting reducing gas is discharged from the chamber 20 via a discharge conduit 30.

As shown in FIG. 2, the apparatus for removing dust particles for implementing the method of removing dust particles in accordance with an exemplary embodiment of the present invention includes the injection conduit 10 configured to inject reducing gas, the chamber 20 configured to include a sacrificial nozzle unit 25 for collecting dust particles from the injected reducing gas, and the discharge conduit 30 for discharging the reducing gas containing the collected dust particles.

In the apparatus for removing dust particles from reducing gas of FIG. 2, the sacrificial nozzle unit 25 is illustrated as being formed in two stages within the chamber 20, but this is illustrative. The sacrificial nozzle unit 25 may be formed in one stage or two or more stages.

The injection conduit 10 is connected to a reducing gas supply source, such as a melting gasification furnace, a bath-type smelting-reduction furnace, or an electrical furnace, and is configured to provide a passage for the reducing gas discharged from the melting gasification furnace or the electrical furnace.

The reducing gas can include the pyrolytic residues of coal, such as fixed carbon and ashes, fine-grained reduced iron, and alkali compounds. In the present invention, the dust particles contained in the reducing gas are assumed to include the pyrolytic residues of coal, fine-grained reduced iron, and alkali compounds.

The alkali chloride refers to a low-melting point compound including potassium chloride (KCl) or sodium chloride (NaCl) and having a melting point of about 650°C to 770°C.

The injection conduit 10 includes a first gate 13 for connecting or blocking the flow of reducing gas. Accordingly, when the apparatus for removing dust particles is connected to a reducing gas supply source, such as a melting gasification furnace or an electrical furnace, the first gate 13 can connect or block the flow of reducing gas depending on a work condition.

The reducing gas is injected into the chamber 20 equipped with the sacrificial nozzle unit 25 through the injection conduit 10.

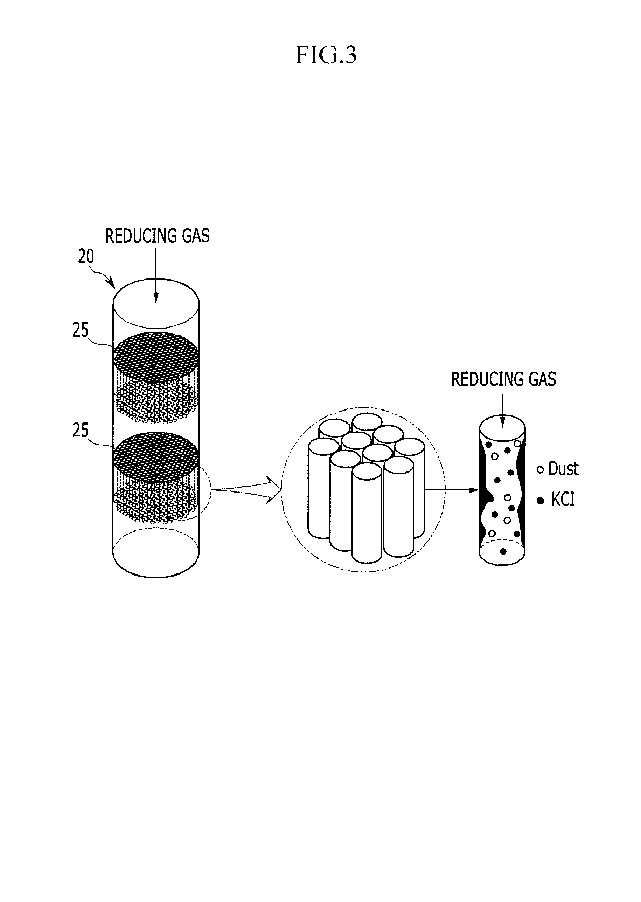

FIG. 3 is an enlarged diagram of the sacrificial nozzle unit 25 formed in the chamber 20 of the apparatus for removing dust particles in accordance with an exemplary embodiment of the present invention and a diagram conceptually showing a phenomenon in which alkali chloride is attached to pipes.

The sacrificial nozzle unit 25 refers to an attachment forming layer that enables attachment-causing materials, included in the reducing gas, to be previously attached to the nozzle unit before the attachment-causing materials are discharged from the chamber 20.

Furthermore, the sacrificial nozzle unit 25 can be formed in multiple stages at specific intervals in the length direction of the chamber 20, and thus a large amount of dust particles included in the reducing gas can be attached to the sacrificial nozzle units 25. That is, the sacrificial nozzle units 25 can be aligned and formed in a direction parallel to the flow of the reducing gas.

Furthermore, the sacrificial nozzle unit 25 can be formed in the form of a packed layer configured to have a wide surface area and to have packing substances capable of transmitting gas smoothly stacked thereon.

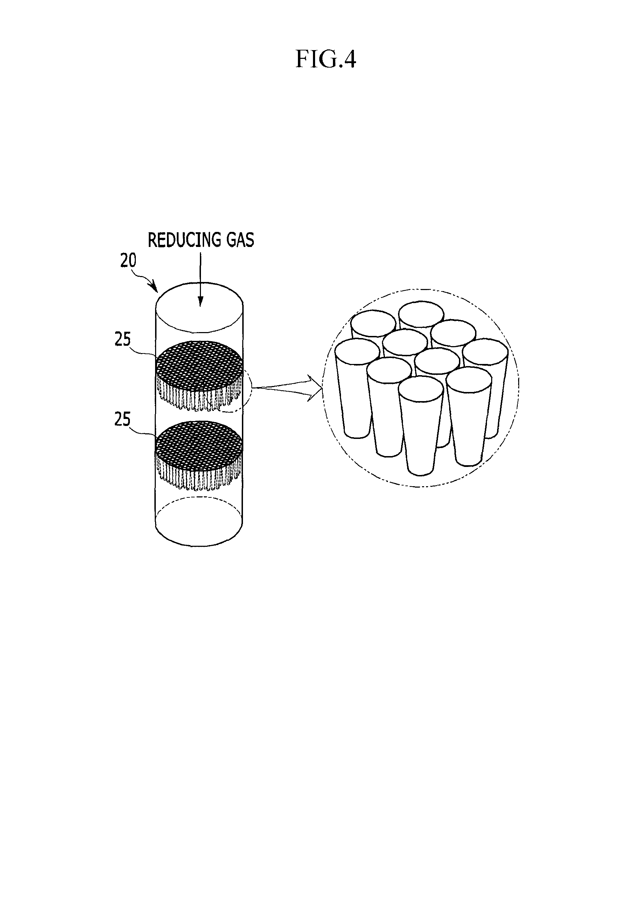

FIG. 4 is an enlarged diagram of a bundle of tapered pipes forming the sacrificial nozzle unit 25 that is formed in the chamber 20 of the apparatus for removing dust particles in accordance with another exemplary embodiment.

The sacrificial nozzle unit 25 can be configured to have a bundle of pipes, and a shape from the input terminal of the sacrificial nozzle unit 25 to the output terminal thereof can have a tapered shape. More particularly, if the sacrificial nozzle unit 25 has a tapered shape, the diameter of the input terminal is wide and the diameter of the output terminal is small.

If the sacrificial nozzle unit 25 is formed of a bundle of pipes, the diameter of each of the pipes can have a range of 10 cm to 15 cm and the length of a bundle of the pipes can have a range of 30 cm to 40 cm.

If the sacrificial nozzle unit 25 has the above shape, dust particles can be attached to the sacrificial nozzle unit 25 more effectively because a contact surface area with reducing gas is reduced.

A temperature of reducing gas passing through the sacrificial nozzle unit 25 can remain in a range of 600°C to 850°C in order to induce the formation of attachments on the sacrificial nozzle unit 25.

If the temperature of the reducing gas is less than 600°C, it is difficult to form attachments because attachment-causing materials within reducing gas are present in a solid state. If the temperature of the reducing gas exceeds 850°C, it is difficult to form attachments because most of attachment-causing material is present in a gaseous state.

A material that forms the sacrificial nozzle unit 25 can be a material having weak corrosion-resistant properties against alkali chloride from among dust particles included in the reducing gas. Stainless steel including SUS310S preferably can be used as the material that forms the sacrificial nozzle unit 25.

Furthermore, a material in which at least one material selected from kaolinite, silicon dioxide, and bauxite has been coated on a surface of the stainless steel can be used as the material that forms the sacrificial nozzle unit 25.

The stainless steel, kaolinite, silicon dioxide, and bauxite correspond to materials which may react to chloride.

The chamber 20 can include at least one differential gauge 40 for detecting pressure at the input terminal and output terminal of the sacrificial nozzle unit 25. The differential gauge 40 can monitor a state in which attachments are formed by measuring a difference in the pressure between the input terminal and output terminal of the sacrificial nozzle unit 25 because the attachments are formed on the sacrificial nozzle unit 25 when the reducing gas passes through the chamber 20.

Furthermore, by adopting a replacement passage pipe 50, if a difference pressure applied to the differential gauge 40 exceeds a certain level and may affect a work because attachments are excessively formed on the sacrificial nozzle unit 25, reducing gas inputted to the chamber 20 is bypassed and the bypassed reducing gas flows through the replacement passage pipe 50. Accordingly, work stability can be achieved.

A second gate 53 is disposed in the replacement passage pipe 50. If pressure applied to the differential gauge 40 falls within a permitted range, the second gate 53 remains in a closed state. If the pressure exceeds the permitted range, the second gate 53 is opened. Accordingly, reducing gas can flow through the replacement passage pipe 50.

That is, the replacement passage pipe 50 can be called an emergency reducing gas passage installed in preparation for a case where reducing gas does not flow through a normal flow passage smoothly due to attachments excessively grown on the sacrificial nozzle unit 25.

The method of removing dust particles from reducing gas in accordance with another exemplary embodiment of the present invention includes a step S10 of providing reducing gas, a step S20 of injecting the reducing gas into the chamber equipped with the sacrificial nozzle unit therein, and a step S30 of discharging reducing gas from the chamber.

The reducing gas is introduced from a reducing gas supply source, including a melting gasification furnace, a bath-type smelting-reduction furnace, or an electrical furnace, and can include the pyrolytic residues of coal, such as fixed carbon and ashes, fine-grained reduced iron, and alkali compounds.

The reducing gas is injected into the chamber 20 equipped with the sacrificial nozzle unit 25, and dust particles within the reducing gas are adhered to the sacrificial nozzle unit 25 formed of a bundle of the pipes within the chamber 20. Accordingly, dust particles within the reducing gas can be reduced.

Furthermore, a contact surface area with reducing gas can be increased because the sacrificial nozzle unit 25 is formed of a bundle of the pipes. The sacrificial nozzle unit 25 can be formed in multiple stages in the length direction of the chamber 20.

Stainless steel having weak corrosion-resistant properties against alkali chloride can be used as a material that forms the sacrificial nozzle unit 25, and at least one material selected from kaolinite, silicon dioxide, and bauxite which easily react with alkali chloride chemically can be coated on a surface of the stainless steel.

The method of removing dust particles from reducing gas further includes a step of measuring a difference in the pressure between the input terminal and the output terminal of the sacrificial nozzle unit 25.

The differential gauge 40 is formed at the input terminal and the output terminal of the sacrificial nozzle unit 25 and is configured to quantitatively monitor a degree in which attachments are formed on the sacrificial nozzle unit 25.

In other words, if a work can be affected because pressure applied to the differential gauge 40 exceeds a certain level owing to attachments excessively formed on the sacrificial nozzle unit 25, the passage of reducing gas introduced into the chamber 20 can be changed.

The method of removing dust particles from reducing gas further includes a step of bypassing reducing gas injected into the chamber 20. The bypass of the reducing gas serves to open the second valve 53 of the replacement passage pipe 50 when pressure applied to the differential gauge 40 exceeds a permitted level, thereby being capable of contributing to work stability.

If pressure applied to the differential gauge 40 exceeds a permitted reference, the reducing gas is bypassed to the replacement passage pipe 50. Accordingly, the sacrificial nozzle unit 25 on which attachments are excessively adhered within the chamber 20 can be replaced with a new sacrificial nozzle unit 25.

In the apparatus for removing dust particles including the injection conduit 10 configured to inject reducing gas, the chamber 20 configured to include the sacrificial nozzle unit 25 for collecting dust particles from the injected reducing gas, and the discharge conduit 30 configured to discharge the reducing gas containing the collected dust particles, the sacrificial nozzle unit 25 of the apparatus for removing dust particles in accordance with yet another exemplary embodiment of the present invention is made of stainless steel.

In the sacrificial nozzle unit 25 of the apparatus for removing dust particles, at least one selected from kaolinite, silicon dioxide, and bauxite is coated on a surface of the stainless steel.

The present invention provides technology in which attachments are induced to be formed and removed by using the apparatus for removing dust particles before dust particles or alkali compounds included in reducing gas discharged from a reducing gas supply source, such as a melting gasification furnace or an electrical furnace, are supplied to the reduction furnace.

According to the above method, as described above, a device capable of selectively removing alkali compounds is installed in the reducing gas conduit between the reducing gas supply source and the reduction furnace so that the alkali compounds are removed and clean reducing gas is supplied to the reduction furnace. Accordingly, attachments can be prevented from being formed in the nozzles formed in the distribution plate that forms the reduction furnace.

Furthermore, a reduction rate of reduced fine iron discharged from the fluidized reduction furnace can be improved by increasing a temperature of reducing gas injected into the fluidized reduction furnace to 800°C or higher. As a result, fuel costs can be reduced.

While some exemplary embodiments of the present invention have been described with reference to the accompanying drawings, those skilled in the art to which the present invention pertains will understand that the present invention may be implemented in other various forms without departing from the technical spirit or essential characteristics of the present invention.

Accordingly, the aforementioned embodiments should not be construed as being limitative, but should be construed as being only illustrative from all aspects. The scope of the present invention is defined by the appended claims rather than the detailed description. It should be understood that all modifications or variations derived from the meanings and scope of the present invention and equivalents thereof are included in the scope of the appended claims.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A method of removing dust particles from reducing gas, comprising the steps of:
supplying reducing gas;
injecting the reducing gas into a chamber equipped with a sacrificial nozzle unit therein; and
discharging the reducing gas from the chamber.

2. The method of claim 1, further comprising the step of measuring a difference in a pressure between an input terminal and an output terminal of the sacrificial nozzle unit.

3. The method of claim 1 or 2, further comprising the step of bypassing the reducing gas injected into the chamber.

4. An apparatus for removing dust particles from reducing gas, comprising:
an injection conduit configured to inject reducing gas;
a chamber configured to comprise a sacrificial nozzle unit for collecting dust particles from the injected reducing gas; and
a discharge conduit configured to discharge the reducing gas including the collected dust particles.

5. The apparatus of claim 4, wherein a temperature of the reducing gas ranges from 600°C to 850°C.

6. The apparatus of claim 4, wherein the injection conduit comprises a first gate for connecting or blocking a flow of high-temperature gas.

7. The apparatus of claim 4, wherein the sacrificial nozzle unit comprises a bundle of pipes.

8. The apparatus of claim 4, further comprising at least one differential gauge for detecting pressure applied to an input terminal and output terminal of the sacrificial nozzle unit.

9. The apparatus of claim 4, wherein a plurality of the sacrificial nozzle units included in the chamber is formed in multiple stages in a length direction of the chamber.

10. The apparatus of any one of claims 4 to 9, further comprising a replacement passage pipe connected to the chamber and configured to bypass the injected reducing gas.

11. The apparatus of claim 10, wherein the replacement passage pipe comprises a second gate for connecting or blocking a flow of high-temperature.

12. A sacrificial nozzle unit of an apparatus for removing dust particles, comprising an injection conduit configured to inject reducing gas, a chamber configured to comprise a sacrificial nozzle unit for collecting dust particles from the injected reducing gas, and a discharge conduit configured to discharge the reducing gas including the collected dust particles,
wherein the sacrificial nozzle unit is made of stainless steel.

13. The sacrificial nozzle unit of claim 12, wherein at least one selected from kaolinite, silicon dioxide, and bauxite is coated on a surface of the stainless steel.
